# EUROPEAN PATENT SPECIFICATION

(11) **EP 1 199 934 B1**
(45) Date of publication and mention of the grant of the patent: **25.02.2004**
(21) Application number: 00954178.0
(22) Date of filing: 07.08.2000
(51) Int. Cl.: A01N 59/12, A01N 25/10, A01N 25/04

(54) **TOPICAL ANTISEPTIC COMPOSITION**
TOPISCHE ANTISEPTISCHE ZUSAMMENSETZUNG
COMPOSITION TOPIQUE ANTISEPTIQUE

(30) Priority: 05.08.1999 US 369133
(43) Date of publication of application: 02.05.2002
(73) Proprietor: Triosyn Holding Inc., Mirabel, Québec J7J 1M3 (CA)
(72) Inventor: MESSIER, Pierre, Jean, Quebec J0T1L0 (CA); BOURGET, Stéphane, Montreal, Quebec H2P 2K3 (CA); ST-LOUIS, Jean-Pierre, Prévost, Quebec J0R 1T0 (CA)
(74) Representative: Hoffmann, Jörg Peter, Dr. Ing.
(86) International application number: PCT/CA2000/000909
(87) International publication number: WO 2001/010219

(56) References cited:
- EP-A- 0 402 865
- WO-A-94/06296
- WO-A-99/46990
- US-A- 5 128 125
- US-A- 5 242 985
- US-A- 5 716 611

## Description

This invention relates to a topical antiseptic composition comprising as an active agent an halogenated resin. The topical antiseptic composition may be used in the pharmaceutical and/or cosmetic industries. The present invention in particular relates to polymeric or resin antiseptic substances or compositions which may be used for the active agent.

The present invention will be described hereinafter, in particular, by way of example only, in relation to applications of a pharmaceutical nature but is applicable to other applications such as for example cosmetic applications (e.g. for creams or lotions for cosmetic uses).

There is a continuing interest in the development of topical antiseptic compositions which have the capacity to devitalise toxic biological agents on the skin or other body membrane of an animal (e.g. the skin of a mammal such as a human being). There is in particular a continuing need for an effective topical antiseptic composition which is able to devitalise toxic biological agents on or within a wound, lesion, bum and the like, e.g. on or within a laceration or break in the skin or other body membrane such as for example a mucous membrane.

Iodine/resin substances have been proposed for use as a demand disinfectant against biological agents, namely against microorganisms such as fungi, bacteria, viruses etc: United States patent nos. 3,817,860, 3,923,665, 4,238,477, 4,420,590, 5,431,908, and 5,639,452 describe such iodine/resin substances for devitalising microorganisms; the entire contents of each of these patents is incorporated herein by reference. United States Patent No. 5,639,452, , in particular discloses a (demand) disinfectant substance comprising an iodine impregnated ion exchange resin in which the iodine is more tenaciously associated with the resin than with previously known (demand) iodine impregnated resin disinfectants.

It has been determined that halogen/resin substances may be used as active agents for topical antiseptic compositions.

Thus the present invention in a general aspect relates to a topical antiseptic composition comprising, as antiseptic active agent, an halogenated or halide resin. The expressions halogenated resin, halide-resin, halide/resin and the like are to be understood herein as being used interchangeably and as including or relating to resin wherein halogen is absorbed or impregnated therein (e.g. in accordance with known methods and more particularly in accordance with the method(s) described herein).

Thus the present invention provides a topical antiseptic composition comprising an antiseptic active agent and a dermatologically or physiologically acceptable (e.g. pharmaceutically acceptable) vehicle or carrier for topical application, said antiseptic active agent comprising an halogenated resin.

Prior art document WO-A-94/06296 discloses an iodine/resin disinfectant which is used to sterilize or disinfect fluids containing microorganisms, particularly water, air, pus excuded from a lesion and the like. According to a preferred embodiment it is provided a sterilisation dressing comprising a disinfectant component and a carrier component. The carrier is a pharmaceutically acceptable material, i.e. an inert and solid material.

According to the disclosure of EP-A-0 402 865 it is described a method of preparing a polyiodide quaternary ammonium anion exchange resin disinfectant containing a high concentration of I₅-exchange sites. The resulting product is a stable resin of predetermined I₅-content which is highly effective as a disinfectant for water.

The teaching of WO-99/46990 discloses a converted resin obtained by exposing resin particles in the range of about 0.1-300 µm to a sufficient amount of a halogen-substance, resulting in a resin having a greater proportion of available ionic halogen. Such resin is used in a protective coating useful on objects that are likely to be exposed to chemical or biological agents, as dry aerosol or in "dust-coating" for water sensitive objects, e.g. electronic and electrical equipment. The protective coating comprises a carrier capable of holding the converted resin particles in suspension. The carrier may be a chemical warfare agent resistant coating, a hazardous industrial chemical resistant coating, a coating that is selectively permeable to specific fluids, or latex.

The active agent (i.e. halogenated resin) may, for example, be present in a topical antiseptic composition of the present invention in an amount of up to 10% by weight (e.g. 0.1% to 10% by weight) based upon the total weight of the topical composition; lower or higher concentrations of active agent may of course be used such as for example up to 95 % by weight based upon the total weight of the topical composition.

In accordance with the present invention, the antiseptic active agent may comprise in addition to an halogenated resin any other (known) antiseptic agent(s) having a suitable or desired antiseptic characteristic or quality provided of course that such additional agent(s) do(es) not interfere with the activity of the halogenated resin(s) present in the topical antiseptic composition. On the other hand the antiseptic active agent may consist of an halogenated resin, i.e. halogenated resin may be the only antiseptic active agent present in the topical antiseptic composition. In any case, a single type of halogenated resin may be present in the topical antiseptic composition; alternatively the antiseptic composition may comprise a mixture of various types of halogenated resins. The topical composition may also comprise any other type(s) of (known) active agent(s) having an activity other than an antiseptic activity (e.g. a pain killer activity); again provided of course that such additional agent(s) do(es) not interfere with the activity of the halogenated resin(s) present in the topical antiseptic composition.

As used herein, the expression "toxic biological agent" refers to a hazardous biological organism including fungi, viruses and bacteria, (whether in the form of spores or otherwise), as well as eukaryotic parasites such as Giardia, i.e. hazardous is used herein in the sense that such an organism may cause harm to life or health of a life form such as for example of a mammal, and particularly those which may cause harm to human life or health. The terms "antiseptic", "devitalise" and the like are to be understood herein as characterising a composition, substance or material as being able to kill a (toxic) biological agent or to render a (toxic) biological agent inactive, ineffective, or substantially less effective for causing harm to life or health, and particularly human life or health. As used herein the expression "antiseptic active agent" refers to an agent able to confer an antiseptic quality to a topical composition, i.e. an agent able to devitalise a (toxic) biological agent. As used herein the expression "a substantial proportion" in relation to particle size is to be understood as characterizing the particles as comprising at least a majority (i.e. more than 50%) by weight of the particles.

In accordance with the present invention, a halogenated resin capable of devitalising toxic biological agents may comprise halide/resin particles; the particle or granular form of the halogenated resin is advantageous due to the high surface area provided for contact with the toxic chemical agent (see US patent no. 5,639,452). The halogenated resin particles may, have any desired or required particle size keeping in mind the function thereof i.e. they are to act as an antiseptic active agent.

The halide-resin particles may, for example, be selected or segregated so as to obtain an amount (i.e. group) of particles wherein all or at least a substantial proportion (or amount) of said segregated particles have a particle size greater than 300 microns; the segregated halide-resin may, for example, comprise granules or particles having a size in the range of from 0.2 mm to 0.8 cm (e.g. of from 0.35 mm to 56 mm).

On the other hand, in accordance with a particularly preferred aspect of the present invention all or at least a substantial proportion (or amount) of the segregated halogenated resin particles may have a particle size in the range of from 0.1 µm to 300 microns; the halide-resin particles may, for example, have a particle size substantially in the range of from (about) 0.1 to 3 µm, from 2 to 10 µm, from 3 to 5 µm, from 5 to 15 µm, from 5 to 300 µm.

Depending on the desired requirements, the halogenated resin may, if so desired, comprise a mixture of particles having a large or wide range of particle sizes; e.g. the halide/resin may comprise a desired proportion by weight of beads (e.g. 0.2 to 0.5 mm), a desired proportion by weight of fragments (e.g. 150 to 300 µm) and a desired proportion by weight of dust sized particles (e.g. 0.1 to 3 µm).

A halogenated resin is in any case to be chosen on the basis it may be capable of killing or reducing the activities of (toxic) biological agents, i.e. on the basis that it is an antiseptic (i.e. disinfectant) halogenated resin. The antiseptic halide/resin may be a demand-type disinfectant, i.e., a substance from which halide ions are released almost entirely on a demand-action basis upon contact with a target agent but that does not otherwise release substantial amounts of the devitalizing and deactivating substance into the environment. Such a demand-type substance essentially would be capable of deactivating target agents on demand, at least until the halide-resin has been exhausted. Such demand halogenated resin(s) as well as a process(es) for their preparation for example described in US-A-5,639,452, (Messier).

In accordance with the present invention the halogenated resin may, for example, be an iodinated resin. The halogenated resin may, for example, comprise an halogenated exchange resin; the halogenated resin may in particular comprise an halogenated anion exchange resin; the halogenated resin may more particularly comprise an halogenated strong base anion exchange resin. The halogenated resin may, for example, comprise an iodinated exchange resin; the halogenated resin may in particular comprise an iodinated anion exchange resin; the halogenated resin may more particularly comprise an iodinated strong base anion exchange resin.

In accordance with the present invention the halogenated resin may comprise a (e.g. strong base anion exchange) resin component thereof which represents from 25 to 90 percent by weight (e.g. 45 to 65 percent) of the total weight of the halide/resin. In the case of an iodinated/resin, the resin component may represent from 25 to 90 percent by weight (e.g. 40 to 65 percent) of the total weight of the iodinated /resin; or stated otherwise the iodinated resin may for example comprise from 35 to 60 % by weight iodine. The iodinated/resin may comprise particles having a size as mentioned herein.

In accordance with the present invention the dermatologically or physiologically acceptable carrier for topical application may be any (known) carrier suitable for topical application, e.g. for applying to skin. The carrier may take any desired or required (known) form for topical application such as for example, the form of a cream, gel, ointment, soap bar, etc .... The carrier is in any event a medium which is compatible with the skin, the nails, the mucous membranes, tissues, or hair, as the case may be. The carrier is of course also to be chosen on the basis that it will not interefere with the antiseptic quality of the halogenated resin. The topical compositions may be formulated into any pharmaceutical form normally employed for such an application, in particular in the form dispersions of lotion type, aqueous, anhydrous or lipophilic gels, emulsions of liquid or semi-liquid consistency of the milk type, obtained by dispersion of a fatty phase in an aqueous phase (O/W) or conversely (W/O), or suspensions or emulsions of runny, semisolid or solid consistency of the cream or gel type. The topical compositions may also be formulated as solid preparations constituting soaps or cleansing bars. The compositions may be formulated according to conventional techniques. The topical antiseptic compositions may, for example, constitute protective, treatment or care compositions for the face, for the hands, for the feet, etc...

As mentioned above, various carriers may be used in the context of the present invention. Thus for example, a dermatological gel, cream, or ointment may be used to make the topical antiseptic compostion of the present invention. The composition itself may, for example, be made by admixing particles of a halogenated resin(s) as described herein with a pre-prepared topical carrier. A topical antiseptic composition may for example comprise, as a carrier, an aloe gel; the halogenated resin(s) may for example if desired or necessary be incorporated into the gel along with one or more other agents such as for example lidocaine or any analgesic such as, for example, carbocaine, benzocaine, etc.. Any suitable pharmaceutical (or cosmetic) grade method may be used to mix together the various components of the topical composition ; e.g. stainless steel vessel with rotor-mixer, blender, manual mixing, etc.. As mentioned above, the halogented resin may be in the form of particles of from 0.1 to 300 µm and in particular in the form of a powder comprising particles of from 2 to 10 µm. The halogenated resin may be an iodinated resin having a 35% to 75% (e.g. 35% to 60%) by weight iodine content. The complete topical composition may include, for example, from 1 to 10% by weight of iodinated resin.

Thus for example a topical antiseptic composition of the present invention may be made by thoroughly mixing in a suitable blender the following components on a Weight/Weight (W/W) basis:
a) 95.5% pure aloe vera gel (such as manufactured by Hawaiian tropic, Jamieson, Banana boat, Solarcaine),
b) 3.5% Triosyn T50 (50% by weight iodine content) powder (10 microns) from Hydro Biotech, Quebec, Canada
and c) 1% lidocaine.

The contact between the topical antiseptic composition and the toxic biological agent is to be for a sufficient time and under conditions which are sufficient to allow the halogenated disinfection resin to devitalise the target toxic biological agent. For purposes of the present invention, it will be understood by those of ordinary skill in the art that the term "sufficient" as used in conjunction with the terms "amount", "time" and "conditions" represents a quantitative value which represents that amount which provides a satisfactory and desired result, i.e. devitalise toxic biological agents. The amounts, conditions and time required to achieve the desired result will, of course, vary somewhat based upon the type and amount of toxic biological agent present.

In accordance with the present invention, a halogen substance capable of devitalising toxic biological agents may comprise halide-resin particles comprising polyhalide ions having a valence of -1 absorbed or impregnated into resin particles; the particles may have a size as mentioned above, e.g. the particles may have a particle size substantially in the range of from (about) 0.1 to 300 µm.

The halide-resin may be characterized in that it may be obtained from a process wherein an activated halogenated resin (i.e. an initially halogenated resin) may be ground and segregated into particles of desired size, e:g. particles substantially in the range of from (about) 0.1 to 300 µm. Thereafter the particles of desired size may be exposed to a sufficient amount of a halogen-material absorbable by the activated resin to form converted resin particles having a greater proportion of available ionic halogen (relative to the initial ground activated halogen-resin), with the halogen-material being selected from the group consisting of I₂, Cl₂, Br₂, F₂ as well as polyiodide ions having, a valence of - 1.

As used herein, the terms "polyhalide," "polyhalide ions," and the like refer to or characterize a material or a complex that has three or more halogen atoms and a valence of - 1, and which may be formed if a molecular halogen (e.g., bromine as Br) combines with a monovalent trihalide ion (e.g. a triiodide ion) or pentahalide ion (pentaiodide ion). Iodine, bromine and chlorine may be used as a source of molecular halogen. Similarly, the terms "polyiodide," "polyiodide ions," and the like refer to or characterize a material or a complex that has three or more Iodine atoms and that may be formed if molecular iodine combines with the monovalent triiodide ion. The terms "triiodide, "triiodide ion," and the like refer to or characterize a material or a complex that contains three iodine atoms and has a valence of -1. The triiodide ion herein therefore is a complex ion which may be considered as comprising molecular iodine (i.e., iodine as I₂) and an Iodine ion (I⁻).

In accordance with the present invention a method of making a suitable halogenated substance or composition, may comprise the steps of providing an activated halide-resin (e.g. obtained by subjecting starting resin to the high temperature /pressure process described in U.S.-A-5,369,452 (herein sometimes referred to as the "Messier Process"));
forming the activated resin into particles; selecting or segregating obtained halogen-resin particles substantially in the range of about 0. 1 -300 µm and
forming converted resin particles from the segregated particles of about 0.1 -300 microns having a greater proportion of available ionic halogen relative to the initial segregated particles.

The activated resin may be used per se as a halide-resin for contact with a toxic chemical agent or as a starting material for an above mentioned converted halide-resin. The activated resin for making the converted halide resin may be an anionic triiodide resin, a divinyl styrene triiodide resin, etc.

The starting resin for the preparation of the activated resin may be any suitable (known) resin which may give rise to a halogenated resin able to deactivate a toxic chemical agent.

The starting resin for the preparation of the activated resin may be any (known) anion exchange resin (for example, with those such as are described in more detail in the above-mentioned United States patents such as United States -A- 3,923,665 and 5,639,452). The starting resin may for example be a strong base anion exchange resin. A quaternary ammonium anion exchange resin is, however, preferred. As used herein, it is to be understood that the expression "strong base anion exchange resin" designates a class of resins which either contain strongly basic "cationic" groups, such as quaternary ammonium groups or which have strongly basic properties which are substantially equivalent to quaternary ammonium exchange resins. United States -A- 3,923,665 and 3,817,860 identify a number of commercially available quaternary ammonium resins, as well as other strong base resins including tertiary sulfonium resins, quaternary phosphonium resins, alkyl pyridinium resins and the like. The starting resin may be a strong base anion exchange resin having strongly basic groups in a salt form; the resin may be in any salt form provided that the anion is exchangeable with the iodine member (e.g. with triiodide ion). The starting resins which may be used herein may, for example, be in a hydroxyl form, a chloride form, an iodide form or in another salt (e.g. sulphate) form provided as mentioned above, that the anion is exchangeable with the iodine member (e.g. with triiodide ion). In accordance with the present invention the anion exchange resin may, for example, be a quaternary ammonium anion exchange resin; in his case the anion exchange resin may be in the iodide form I⁻, in the chloride form Cl⁻, in the hydroxyl form OH⁻; etc....

Commercially available quaternary ammonium anion exchange resins which can be used in accordance with the present invention include in particular, Amberlite IRA-401 S, Amberlite IR-400 (Cl⁻), Amberlite IR-400 (OH⁻), etc., (from Rohm & Hass) which may be obtained in granular form. These resins may for example, contain quaternary ammonium exchange groups which are bonded to styrene-divinyl benzene polymer chains.

Converted resin particles may be formed by again following the process as described in U.S.-A-5,369,452 i.e. after particle segregation the halide-resin particles of desired size (i.e. of size less the 300 µm) may be subjected to the "Messier Process". Thus converted resin particles may be formed by exposing the segregated halogen-resin particles to a sufficient amount of a halogen-material to form converted resin particles. The halogen-material may, for example, be selected from the group consisting of Cl₂, I₂, Br₂, polyhalide ions having a valence of -1 and mixtures thereof. Absorption of at least a portion of the halogen-material may be effected at elevated temperatures, i.e., temperatures higher than 100° C and up to 210° C, and elevated pressures, i. e., pressures greater than atmospheric pressure and up to 100 psi. (for suitable process conditions please see U.S-A-5,639,452 mentioned above).

The halogen resin substance of the present invention may be prepared starting with a commercially available polyhalide-resin. The starting resin may comprises polyhalide ions having a valence of - 1 absorbed or impregnated into the resin. The starting resin may in particular be a polyiodide-resin, most preferably, triiiodide-resin (i.e., resin having, triiodide ions of formula I₃ absorbed thereon). Preferred starting resins include Triosyn (registered trademark) iodinated divinyl styrene-based resins, available from Hydro Biotech, Quebec, Canada.

The starting polyhalide-resin may take any commercially available form, for example, finely divided fragments or granules, particles, beads, plates or sheets etc....

Generally, the starting polyhalide-resin may be prepared from a porous strong base anionic exchange resin in a salt form. The anion exchange resin is exposed to a sufficient amount of a halogen-material (such as those described herein) absorbable by the anion exchange resin so as to convert the anion exchange resin into an "halide-resin" (i.e. an activated halide-resin). For example, a suitable triiodide starting resin may be prepared from a divinyl styrene ion exchange resin by using the "Messier Process". It is believed that halogenated resins prepared using a quaternary ammonium ion exchange resin as described in United States -A- 5,431,908 to Lund and other suitable anion exchange resins also may be useful in the practice of this invention, (i.e. after particle segregation the halide particles may be subjected to the "Messier Process"). Ion exchange resins useful in the practice of the invention typically may be available in the chloride or sulfate form in which case the ion exchange resin may, as desired, be converted to the iodide (I⁻) or bromide (Br⁻) form of the resin before initial activation.

Halogen-materials useful in preparing the activated resin may comprise any of the halogen group of materials that may give rise to an active halide-resin (i.e. a deactivating halide-resin). The halogen-material typically may be selected from the group consisting of diatomic iodine, diatomic bromine, and polyiodide ions having a valence of-1. The term "halogen-substance includes a polyhalide salt carrier solution circulated in contact with an elemental halide as described by Lund.

The activated resin may be processed to (mechanically) segregate and obtain resin particles of the desired particle size, preferably substantially in but not limited to the range of about 0.1-300 µm, including, by way of example, ranges of about 0.1-3 µm, 3-15 µm, and 15-300 µm. Small particles are desirable because they provide a high surface area for interaction with toxic chemical agents.

Resin particles of the desired size may be produced by processing the activated resin (preferably starting with the bead form) using conventional non cryogenic grinding and/or milling devices. Satisfactory results have been obtained using an impact grinder with a stainless steel wheel in combination with a jet mill. Consistent feed and extraction rates are helpful. The resultant powder is sieved to remove oversized particles, which may be reprocessed. Undersized particles generally are discharged during processing. Scale-up may, however, be achieved using a cryogenic grinding process.

Commercially available ion exchange resins (such as those used to produce the activated resin described herein) are difficult to process into particles within the desired 0.1 to 300 µm range before activation of the resin and loss rates may be expected to be unacceptable even when it is possible be do this. Initial halogenation of the starting resin alters its crystal structure, and thus its fracture properties, making grinding and milling somewhat easier. A resin having, an iodine content of at least about 30% may for example be used to achieve reasonably grindable resin. Resins having an even higher iodine content are likely to exhibit improved grindablility. In any event it is nevertheless to be understood that the starting resin itself may be ground (e.g. cryogenically) to provide particles of 0.1 to 300 µm and these ground starting particles may be subjected to the Messier Process (i.e. directly).

Conversion of activated resin to converted resin may be accomplished by subjecting finely divided particles of an activated halide-resin to a repeat of the "Messier Process". In general, the conversion is accomplished by contacting finely divided particles of an activated halide-resin with a sufficient amount of a halogen-material absorbable by the activated resin to fom converted resin particles having a greater proportion of available ionic halogen i.e. relative to the initial ground halide resin particles as a whole.

The following description will provide a general outline of the "Messier Process" to which the ground particles may be subjected; the comments will of course apply equally to the preparation of activated resin from a starting resin; for more details see U.S.-A-5,369,452.

Conversion may be accomplished, for example, by exposing the activated resin particles to a sufficient amount of a halogen material absorbable by the activated resin to form converted resin particles. The halogen-material used in accomplishing this conversion may be any material or material capable of donating a halogen-member absorbable by the activated resin to form converted resin particles; the donatable halogen-member may be diatomic iodine, diatomic bromine, or a polyiodide ion having a valence of -1. Examples of such materials include compositions comprising iodine (I₂), bromine (Br₂) and alkali metal or other halides, such as potassium iodide, sodium iodide and ammonium iodide in association with water. For example, Iodine may be combined with the preferred alkali metal halide, potassium iodide and a minor amount of water, i.e. an amount of water sufficient to avoid I₂ crystallisation.
The composition may contain monovalent iodine ion that may combine with diatomic Iodine (I₂) to form a polyiodide ion.

Unless preparation of a mixed halide resin is desired, the halogen- material selected comprises the same halide as is present in the activated resin. For example, the halogen material used for conversion of a Triosyn activated resin would comprise an iodine material, i.e. a material selected from the group comprising crystalline of iodine (I₂)and polyliodide ions having a valence of - 1

The total amount of halogen to be contacted ;with the activated resin, residence times, reaction conditions and the like will depend upon such factors as the nature of the polyhalide it is desired to introduce into the structure of the activated resin, the nature of the activated resin, the intended use of the converted resin, and the desire to minimize the amount of unabsorbed halogen that must be washed from the converted resin particles. The ratio of iodine to resin in the converted resin composition may be in the range of about 50%.

In accordance with the present invention, conversion of the activated resin, and particularly Triosyn resin, may be effected at elevated temperature greater than 100° C., for example in the range of 105° C. to 150° C. (i.e., 110° to 115° C. to 150° C.), the upper limit of the temperature used will depend, among other things, on the characteristics of the resin being used. The elevated pressure is any pressure above ambient pressure (e.g., a pressure greater than atmospheric or barometric pressure, i.e. greater than 0 psig). The pressure may, for example, be 1 psig or higher, e.g., in the range from 5 to 50 psig; the upper limit of the pressure used will depend, among other things, on the characteristics of the resin being used.

The conversion at elevated conditions may be effected in a reactor that is pressure sealable during conversion but that may be opened for recovery of the resin product after a predetermined reaction time. The process may thus be a batch process wherein conversion at elevated temperature and pressure is effected once the reactor is sealed. The reactor may be sized and the amount of reactants determined so as to provide a void space in the reactor during, reaction such that contact tak-es place under an essentially halogen-rich atmosphere.

The pressure in the closed vessel or reactor used to convert the resin to a polyhalide may be a function of the temperature, such that the pressure may vary with the temperature approximately in accordance with the ideal gas equation PV=n-RI, wherein V=the constant (free) volume of the reactor, n = moles of material in the reactor, R is the universal gas constant, T is the temperature and P is the pressure. In a closed vessel, the temperature of the system may therefore be used as a means of achieving or controlling the desired pressure in the vessel depending upon the makeup of the halogen-material in the reactor. Thus, a reaction mix disposed in a pressure sealed reactor may, for example, be subjected to a temperature of 105° C. and a pressure of (200 mm Hg) 200 Torr.

Alternatively, a relatively inert gas may be injected into a sealed reactor to induce and/or augment the pressure in the reactor. Iodine, an inert (noble) gas, air, carbon of oxide, nitrogen or the like may be used as a pressuring gas, provided the chosen gas does not unduly interfere with the production of a suitable halogenated resin. If pressure is to be induced by steam, steps should be taken to isolate the reaction mix from excess water. The inert gas preferably is used to augment the pressure resulting from the use of elevated temperatures to effect conversion.

The residence or contact time at the elevated conditions may vary depending upon the starting materials, contact conditions, amount of tenaciously held halogen it is desired to be absorbed by the activated resin, and other process factors. The contact time may thus take on any value; however, it is expected generally that the contact time under the conditions used will be sufficient to maximize the amount of tenaciously held halogen absorbed from the material containing the absorbable halogen-material. The residence time may for example be as little as 5 to 15 minutes (in the case where a pre-impregnation step is used, as described below) or several hours or more (e.g., up to 8 or 9 hours or more).

The elevated temperature./pressure contact conditions may be chosen to maximize the halogen content of the obtained halide-resin. For Triosyn resins in which the halogen material used during conversion includes crystalline of iodine, exposure of the activated resin to, the halogen - material at a temperature and pressure at or about the triple point of crystalline of iodine is believed to promote absorption of the maximum amount of available iodine.

It is believed that other halide resins as well as mixed polyhalide-resins also may be useful in the practice of the invention. The preparation of mixed polyhalide-resins may be carried out in two steps. In the first step, the activated resin may be exposed to a halogen-material containing a first
elemental halogen (e.g., diatomic iodine) in a quantity sufficient to form some converted polyiodide-resin and unconverted resin. In the second step, the resin mixture may be exposed to a halogen-material containing a second elemental halogen (e.g., diatomic bromine, chlorine , etc..) in a. quantity sufficient to convert the unconverted resin to polyhalide-resin.

The converted halide-resin may be treated prior to use to remove any water-elutable iodine, such as, for example, potassium iodide, from the surface of the halide-resin so that on drying of the resin, no crystals of halogen compounds will form on the surface of the halide-resin. The treatment (e.g., washing) may be continued until no detectable iodine (e.g. a total iodine content of less than 0.5 parts per million) or other halogen is found in the wash water. Any suitable iodine test procedure may be used for iodine detection purposes, if desired.

Throughout this specification, when a range of conditions or a group of substances, materials, compositions, concentrations, particle size, temperature, pressure, time, etc. is defined with respect to a particular characteristic of the present invention, the present invention relates to and explicitly incorporates each and every specific member and combination of sub-ranges or sub-groups therein. Any specified range or group is to be understood as a shorthand way of referring to each and every member of a range or group individually as well as each and every possible sub-range and sub-group encompassed therein; and similarly with respect to any sub-ranges or sub-groups therein. Thus, for example, a pressure greater than atmospheric is to be understood as specifically incorporating each and every individual pressure state, as well as sub-range, above atmospheric, such as, for example, 2 psig, 5 psig, 20 psig, 35.5 psig, 5 to 8 psig, 5 to 35 psig, 10 to 25 psig, 20 to 40 psig, 35 to 50 psig, 2 to 100 psig, etc.

The converted resin particles may be used to devitalise toxic biological agents susceptible to reaction with iodine.

Topical antiseptic compositions in accordance with the present invention were prepared and tested against various biological agents such as Bacillus subtilis *var niger* spores (commonly referred as BC, this bacteria is a non-pathogen used for its similarities with *Bacillus anthracis*, a bio-warfare agent), *Klebsiella terrigena* (U.S.EPA bacterial challenge of choice) and *MS2* bacteriophage (a bacterial virus known for its survival capacities in the environment).

The test microorganisms were inoculated on 4 cm x 8 cm pieces of pig skin at a concentration of 105 to 106 microorganisms per ml. The pieces of skin were submitted to a standard contact time of 30 minutes. A number of topical antiseptic compositions comprising triosyn resin(s) from Hydra Blotch Inc. Quebec Canada as well as, ethyl alcohol and existing products for comparison were provide and positive plus negative controls were tested against the microorganisms. Sampling was performed with a cotton swab that was rubbed on the pieces of pig skin, then immersed in phosphate buffered saline. Assay was performed on adequate agar media (MS2 media, Trypticase Soya Agar (TSA )) by the spread plate technique for bacteria and single layer pour plate method for the phage.

Experiments showed that the antimicrobial efficacy of the following creams was enhanced with the addition thereto of iodinated resin namely Triosyn T45 resin (45% by weight iodine) dust (average 10 micron particles) or T50 resin (50% by weight iodine) dust (average 10 micron particles) from Hyro biotech, Quebec, Canada:
a) Lanacane: 6% benzocaine (analgesic) with 2% resorcinol (antibacterial)
b) Osmopak: 60% magnesium sulfate, 0.5% benzocaine (analgesic)
Each of the Triosyn resins were added to each of the creams to provide four topical antiseptic compositions; ; in each case 1 gram of a respective Triosyn resin was admixed with 30 ml of a respective cream.

A number of experiments were conducted with aloe vera gel alone and with topical compositions comprising aloe vera gel and iodinated resin Triosyn T50 (50% by weight iodine) dust (average 10 micron particles) from Hydro biotech, Quebec, Canada; 1 gram of the Triosyn resin T50 was admixed with 30 ml of gel. These tests indicated that the addition of Triosyn T50 dust to an aloe vera gel increases the antiseptic character of the gel as compared to a gel having no iodinated/resin. A topical antiseptic composition (Gel-T50) made up of 30 ml of aloe vera gel (from Jamieson) to which was admixed 1 gram of Triosyn T50 (50% by weight iodine) dust (average 10 micron particles) for example gave 98.6% reduction against BG spores and 99.8% against MS2 phage, a virus.

A topical antiseptic formulation made up of 30 ml Aloe vera gel (from Jamieson) to which was admixed 1 gram of a different iodinated resin, namely an iodinated resin denoted PUR (12 microns) found in a water filter called Voyageur from Engineering Recovery Incorporated (USA) was also found to reduce microorganisms.

A number of experiments were performed to compare Gel-T50 to other different antimicrobial cream, ointment and liquids on the market, namely :
Polysporin triple;
Proviodine 1%;
Spectro Gram soap; and
70% isopropyl alcohol.

None of the above products had the broad antimicrobial capacity of Gel-T50, especially against viruses.

## Claims

1. A topical antiseptic composition comprising an antiseptic active agent and a dermatologically acceptable carrier for topical application,
wherein said antiseptic active agent comprises particles of a halogenated strong base anion exchange resin,
wherein at least a substantial proportion of said particles have a particle size in the range of from 0.1 µm to 300 µm and
wherein said dermatologically acceptable carrier for topical application is selected from the group consisting of dermatologically acceptable carriers for topical application in the form of a milk, a lotion, a cream, a gel, an emulsion, an ointment and a cleansing bar.

2. A topical antiseptic composition comprising an antiseptic active agent and a dermatologically acceptable carrier for topical application,
wherein said antiseptic active agent comprises particles of an iodinated strong base anion exchange resin,
wherein at least a substantial proportion of said particles have a particle size in the range of from 0.1 µm to 300 µm and
wherein said dermatologically acceptable carrier for topical application is selected from the group consisting of dermatologically acceptable carriers for topical application in the form of a milk, a lotion, a cream, a gel, an emulsion, an ointment and a cleansing bar.

3. A topical antiseptic composition as defined in claim 2 comprising up to 10% by weight of said particles of iodinated strong base anion exchange resin.

4. A topical antiseptic composition as defined in claim 2 wherein at least a substantial proportion of said particles have a particle size in the range of from 0.1 µm to 15 µm.

5. A topical antiseptic composition as defined in claim 2 wherein said resin comprises from 35 % to 60 % by weight iodine.

6. A topical antiseptic compostion as defined in claim 2 comprising from 1% to 10% by weight of said particles of iodinated strong base anion exchange resin and wherein at least a substantial proportion of said particles have a particle size in the range of from 0.1 µm to 15 µm and wherein said resin comprises from 35 % to 60 % by weight iodine.

7. A topical antiseptic composition as defined in claim 1 or 2 wherein said dermatologically acceptable carrier for topical application is in the form of an aloe gel.

## Patentansprüche

1. Topische antiseptische Zusammensetzung mit einer aktivierten antiseptischen Substanz und einem dermatologisch akzeptierbaren Träger für topische Anwendung;
- wobei die aktivierte antiseptische Substanz Teilchen eines halogenierten, stark basischen Anionenaustauschharzes enthält;
- wobei zumindest ein wesentlicher Anteil der Zusammensetzung eine Zusammensetzunggröße im Bereich von 0,1 µm bis 300 µm aufweist; und
- wobei der dermatologisch akzeptierbare Träger für topische Anwendung aus der Gruppe ausgewählt ist, die aus dermatologisch akzeptierbaren Trägern für topische Anwendung in Form einer Milch, einer Lotion, einer Creme, einem Gel, einer Emulsion, einer Salbe und einem Reinigungstück besteht.

2. Topische antiseptische Zusammensetzung mit einer aktivierten antiseptischen Substanz und einem dermatologisch akzeptierbaren Träger für topische Anwendung;
- wobei die aktivierte antiseptische Substanz Teilchen eines iodierten, stark basischen Anionenaustauschharzes enthält;
- wobei zumindest ein wesentlicher Anteil der Zusammensetzung eine Zusammensetzunggröße im Bereich von 0,1 µm bis 300 µm aufweist; und
- wobei der dermatologisch akzeptierbare Träger für topische Anwendung aus der Gruppe ausgewählt ist, die aus dermatologisch akzeptierbaren Trägern für topische Anwendung in Form einer Milch, einer Lotion, einer Creme, einem Gel, einer Emulsion, einer Salbe und einem Reinigungstück besteht.

3. Topische antiseptische Zusammensetzung nach Anspruch 2, mit bis zu 10 Gewichts% der Teilchen eines iodierten, stark basischen Anionenaustauschharzes.

4. Topische antiseptische Zusammensetzung nach Anspruch 2, bei der zumindest ein wesentlicher Anteil der Zusammensetzung eine Teilchengröße im Bereich von 0,1 µm bis 15 µm aufweist.

5. Topische antiseptische Zusammensetzung nach Anspruch 2, bei der das Harz 35 bis 60 Gewichts% Iod enthält.

6. Topische antiseptische Zusammensetzung nach Anspruch 2, mit 1 bis 10 Gewichts% der Teilchen eines iodierten, stark basischen Anionenaustauschharzes, und bei der zumindest ein wesentlicher Anteil der Teilchen eine Teilchengröße im Bereich von 0,1 µm bis 15 µm aufweist und bei der das Harz 35 bis 60 Gewichts% Iod enthält.

7. Topische antiseptische Zusammensetzung nach Anspruch 1 oder 2, bei der der dermatologisch akzeptierbare Träger für topische Anwendung in Form eines Aloe-Gels vorliegt.

## Revendications

1. Composition topique antiseptique comprenant un agent actif antiseptique et un support dermatologiquement acceptable pour une application topique,
dans laquelle ledit agent actif antiseptique comprend des particules d'une résine échangeuse d'anions fortement basique halogénée,
dans laquelle au moins une proportion substantielle desdites particules présente une taille particulaire comprise dans la plage de 0,1 µm à 300 µm et
dans laquelle ledit support dermatologiquement acceptable pour une application topique est choisi dans le groupe constitué de supports dermatologiquement acceptables pour une application topique se présentant sous la forme d'un lait, d'une lotion, d'une crème, d'un gel, d'une émulsion, d'un onguent ou d'un pain nettoyant.

2. Composition topique antiseptique comprenant un agent actif antiseptique et un support dermatologiquement acceptable pour une application topique,
dans laquelle ledit agent actif antiseptique comprend des particules d'une résine échangeuse d'anions fortement basique iodée,
dans laquelle au moins une proportion substantielle desdites particules présente une taille particulaire comprise dans la plage de 0,1 µm à 300 µm et
dans laquelle ledit support dermatologiquement acceptable pour une application topique est choisi dans le groupe constitué de supports dermatologiquement acceptables pour une application topique se présentant sous la forme d'un lait, d'une lotion, d'une crème, d'un gel, d'une émulsion, d'un onguent ou d'un pain nettoyant.

3. Composition topique antiseptique selon la revendication 2, comprenant jusqu'à 10 % en poids desdites particules de résine échangeuse d'anions fortement basique iodée.

4. Composition topique antiseptique selon la revendication 2, dans laquelle au moins une proportion substantielle desdites particules présente une taille particulaire comprise dans la plage de 0,1 µm à 15 µm.

5. Composition topique antiseptique selon la revendication 2, dans laquelle ladite résine comprend de 35 à 60 % en poids d'iode.

6. Composition topique antiseptique selon la revendication 2, comprenant de 1 à 10 % en poids desdites particules de résine échangeuse d'anions fortement basique iodée, dans laquelle au moins une proportion substantielle desdites particules présente une taille particulaire comprise dans la plage de 0,1 µm à 15 µm et dans laquelle ladite résine comprend de 35 à 60 % en poids d'iode.

7. Composition topique antiseptique selon la revendication 1 ou 2, dans laquelle ledit support dermatologiquement acceptable pour une application topique se présente sous la forme d'un gel d'aloès.
